# EUROPÄISCHE PATENTSCHRIFT

(11) **EP 3 114 754 B1**
(45) Veröffentlichungstag und Bekanntmachung des Hinweises auf die Patenterteilung: **19.07.2017**
(21) Anmeldenummer: 15709882.3
(22) Anmeldetag: 09.03.2015
(51) Int. Cl.: H02K 1/18, H02K 5/15, H02K 5/06, H02K 9/19, H02K 5/20

(54) **ELEKTRISCHE MASCHINE, BEISPIELSWEISE FÜR EIN STROMERZEUGUNGSAGGREGAT**
ELECTRIC MACHINE, FOR EXAMPLE FOR A POWER GENERATOR
MACHINE ÉLECTRIQUE, PAR EXEMPLE POUR UN GÉNÉRATEUR DE COURANT

(30) Priorität: 07.03.2014 AT 501692014
(43) Veröffentlichungstag der Anmeldung: 11.01.2017
(73) Patentinhaber: AVL List GmbH, 8020 Graz (AT)
(72) Erfinder: UREM, Oliver, A-8600 Bruck/Mur (AT); SCHMIDT, Christian, A-8523 Frauental (AT); FUCKAR, Gernot, A-8046 Graz (AT); BATRUEL, Oliver, A-8430 Leibnitz (AT); STEINBAUER, Michael, A-8054 Graz (AT)
(74) Vertreter: Babeluk, Michael
(86) Internationale Anmeldenummer: PCT/EP2015/054843
(87) Internationale Veröffentlichungsnummer: WO 2015/132416

(56) Entgegenhaltungen:
- WO-A2-2013/057463
- DE-A1-102008 040 873

## Beschreibung

Die Erfindung betrifft eine elektrische Maschine, beispielsweise für ein Stromerzeugungsaggregat, insbesondere für die Reichweitenerhöhung eines elektrisch betriebenen Fahrzeugs oder zum elektrischen Betrieb eines Hybridelektrofahrzeugs (HEV), mit einem an einem Gehäuseteil des Stromerzeugungsaggregates befestigbaren Stator und einem damit zusammenwirkenden Rotor.

Zur Kühlung derartiger elektrischer Maschinen ist es bekannt, in einem gusstechnisch hergestellten Gehäuse zur Aufnahme des Stators eine von einem Kühlmittel durchströmte Kühlkanalanordnung vorzusehen. Die Herstellung derartiger Gehäuseteile samt Kühlkanalanordnungen und deren Anschlüsse für die Zu- und Abfuhr des Kühlmittels ist meist nur im Sandgussverfahren möglich und dadurch relativ aufwändig und kostenintensiv. Bei der Herstellung im Druckgussverfahren ist ein geschlossener Kühlkanal nur sehr aufwändig durch ein zusätzliches Verschlussteil darstellbar.

Aus der DE 10 2008 040 873 A1 ist ein Verfahren zur Herstellung einer elektrischen Maschine sowie eine derartige Maschine für ein Hybridfahrzeug bekannt. Die elektrische Maschine besteht aus einem Gehäuse, in dem ein Stator aufgenommen ist und in dem ein Rotor drehbar angeordnet ist. Der Stator besteht im Wesentlichen aus einem Statorkörper und Statorwicklungen. An einer Lagerschildseite des Gehäuses ist ein Lagerschildteil einstückig angeformt, welches in einer Lageraufnahme ein Festlager zur Lagerung des Rotors aufnimmt. An einer gegenüberliegenden Seite des Gehäuses ist ein separates Lagerschild befestigt, das ein zweites Lager zur Lagerung des Rotors aufnimmt. Zwischen dem Stator und dem Rotor befindet sich ein Luftspalt, der so gering wie möglich gehalten werden muss, damit die elektrische Maschine einen optimalen Wirkungsgrad erreicht. In der Wand des Gehäuses ist ein seitlich geschlossener Kühlkanal ausgebildet, der mit Kühlmittel durchströmt werden kann, das über zwei am Außenumfang der Maschine angeordnete Kühlmittelanschlüsse in den Kühlkanal eingeleitet wird. Das Gehäuse samt Kühlkanal wird nach dem Lost-Foam-Gussverfahren aus drei Gehäuseschaumteilen hergestellt, dessen Teile durch ein Klebeverfahren zusammengefügt und in einer Sandform abgegossen werden. Der flüssige Gusswerkstoff, bevorzugt Aluminium oder Gussstahl, verdampft das Schaumteil und nimmt den Hohlraum in der Gussform ein. Im Kühlkanal sind Stege ausgebildet, sodass im fertigen Gehäuse ein Kühlkanal in Mäanderform vorliegt.

Aus der WO 2013/057463 A2 ist ein Gehäuse einer elektrischen Maschine bekannt, das im Wesentlichen zweiteilig aufgebaut ist. Das Innengehäuse, an welchem der Stator befestigt ist, und das Außengehäuse sind topfartig ausgebildet und bilden mit deren Mantelflächen einen Kühlkanal. Dabei wird ein an der Außenfläche des Innengehäuses umlaufender Kanal seitlich von O-Ringdichtungen begrenzt und nach der Montage des Außengehäuses durch dessen Innenfläche abgedeckt. Nachteilig ist auch hier die relativ aufwändige Gestaltung des Kühlkanals.

Aufgabe der Erfindung ist es diese Nachteile zu vermeiden und bei einer elektrischen Maschine, beispielsweise für ein Stromerzeugungsaggregat, auf möglichst einfache Weise und mit einfach herstellbaren Mitteln eine optimale Kühlung zu erzielen.

Erfindungsgemäß wird diese Aufgabe dadurch gelöst, dass der Stator in einen Statorträger eingefügt oder eingepresst ist, wobei der Statorträger einteilig ausgeführt ist und zwischen einer radialen Außenbegrenzung und einer radialen Innenbegrenzung einen radial umlaufenden, axial in Richtung des benachbarten Gehäuseteils einseitig offenen Kühlkanal aufweist, wobei der Kühlkanal nach der Befestigung des Statorträgers am benachbarten Gehäuseteil axial geschlossen ist.

Der einteilige Statorträger mit seinem auf der gesamten Umlauflänge axial einseitig offenen Kühlkanal kann somit bevorzugt mittels Druckguss, beispielsweise als Aluminiumdruckgussteil, herstellt werden.

Der Statorträger erfüllt trotz einfacher Bauweise drei wesentliche Funktionen:
- Kühlung des Stators der elektrischen Maschine;
- Befestigung des Stators am benachbarten Gehäuseteil;
- Abstützung des Drehmomentes des Stators.

Bei der genannten elektrischen Maschine handelt es sich um eine in den Antriebsstrang eines Fahrzeuges integrierte elektrische Maschine, die dem Antrieb des Fahrzeugs und/oder der Erzeugung von elektrischer Energie dient.

Grundsätzlich sind für das Verbinden von Gehäuseteilen verschiedene Möglichkeiten wie Schweißen, Nieten oder Verschrauben - teilweise mittels eines Flansches - bekannt.

Gemäß einer bevorzugten Ausführungsvariante der Erfindung sind die kreisförmigen Randbereiche der radialen Außenbegrenzung und der radialen Innenbegrenzung durch Kleben oder Schweißen mit dem benachbarten Gehäuseteil verbunden. Durch die gut dichtende Klebe- oder Schweißverbindung werden vorteilhaft keine aufwändig zu montierenden Dichtungsringe benötigt. Durch die Klebe- oder Schweißverbindung ergeben sich zudem Vorteile beim Zusammenbau, wobei einzelne Fertigungsschritte besser automatisiert werden können. Insbesondere bei der Klebeverbindung ergibt sich eine vereinfachte Montage.

Bevorzugt erfolgt die Zu- und Abführung des Kühlmittels in den Kühlkanal über Anschlussbohrungen im benachbarten Gehäuseteil, sodass im Statorträger selbst keine zusätzlichen Bohrungen erforderlich sind.

Die Erfindung wird im Folgenden anhand von Ausführungsbeispielen näher erläutert. Es zeigen:
- Fig. 1: eine erfindungsgemäße elektrische Maschine beispielsweise für ein Stromerzeugungsaggregat in einem axialen Teilschnitt;
- Fig. 2: die elektrische Maschine gemäß Fig. 1 in einer dreidimensionalen Explosionsdarstellung;
- Fig. 3: die erfindungsgemäßen Maschine gemäß Fig. 2 in einer dreidimensionalen Darstellung im Zusammenbau; sowie
- Fig. 4: einen axialen Teilschnitt der elektrischen Maschine gemäß Fig. 1 in einer von Fig. 1 abweichenden Schnittebene.

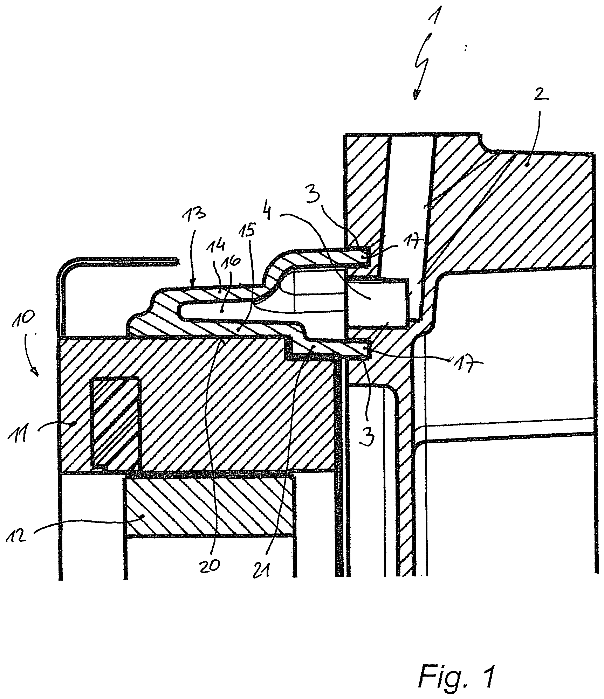

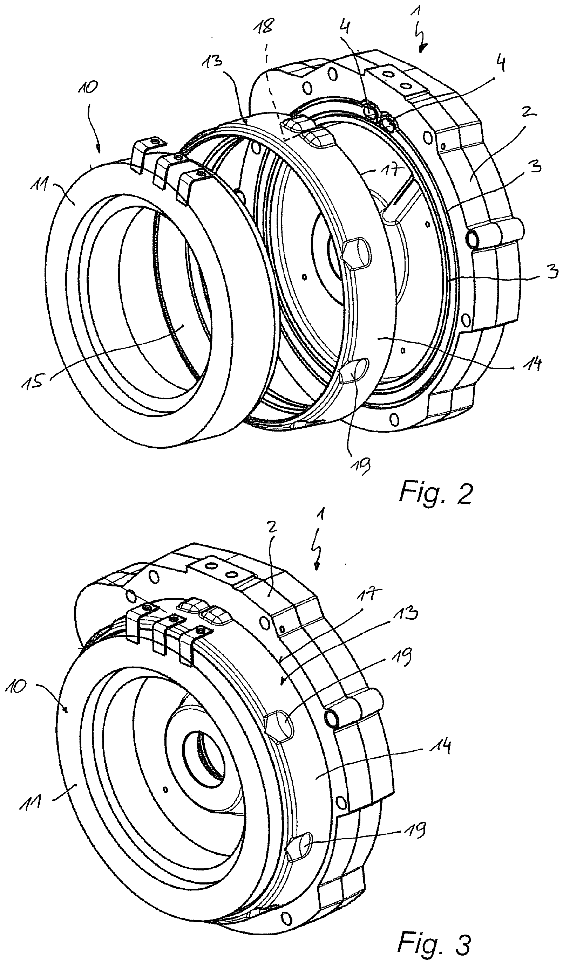

Die in den Fig. 1 bis Fig. 4 dargestellte elektrische Maschine 10 beispielsweise eines Stromerzeugungsaggregates 1 dient insbesondere für die Reichweitenerhöhung eines elektrisch betriebenen Fahrzeuges bzw. zum elektrischen Betrieb eines Hybridelektrofahrzeugs (HEV). Die elektrische Maschine 10 weist einen an einem benachbarten Gehäuseteil 2 des Stromerzeugungsaggregates mit Hilfe eines Statorträgers 13 befestigten Stator 11 auf, welcher mit einem Rotor 12 zusammenwirkt, dessen (nicht dargestellte) Antriebswelle das benachbarte Gehäuseteil 2 durchsetzt. In den Fig. 2 und Fig. 3 wurde der Rotor der elektrischen Maschine 10 aus Gründen der Übersichtlichkeit weggelassen.

Das Blechpaket des Stators 11 kann bevorzugt ohne Gehäuse in den Statorträger 13 eingefügt oder eingepresst werden, wobei der Statorträger 13 bevorzugt einteilig ausgeführt ist und zwischen einer radialen Außenbegrenzung 14 und einer radialen Innenbegrenzung 15 einen radial umlaufenden Kühlkanal 16 aufweist. Der Kühlkanal 16 des Statorträgers 13 ist axial in Richtung des Gehäuseteiles 2 einseitig offen ausgeführt, was dessen Herstellung vereinfacht und wird erst nach der Befestigung des Statorträgers 13 am Gehäuseteil 2 axial geschlossen bzw. abgedichtet.

In einer bevorzugten Ausführungsvariante gemäß Fig. 1 erfolgt die Zu- und Abführung des Kühlwassers über Anschlussbohrungen 4 im Gehäuseteil 2, direkt in den umlaufenden Kühlkanal 16 des Statorträgers 13. Dadurch ist der Statorträger 13 auf einfache Weise mittels Druckguss herstellbar, beispielsweise als Aluminiumdruckgussteil, wobei im Statorträger 13 keine zusätzlichen Bohrungen für die Zu- und Abflussleitungen des Kühlmediums notwendig sind.

Gemäß einer nicht dargestellten Ausführungsvariante ist es auch möglich, dass der Statorträger 13 in seiner radialen Außenbegrenzung 14 entsprechende Anschlüsse für die Zu- und Abführung des Kühlmediums aufweist.

Es ergeben sich mehrere Möglichkeiten für die Befestigung des Statorträgers 13 am Gehäuseteil 2.

So können beispielsweise die kreisförmigen Randbereiche 17 der radialen Außenbegrenzung 14 und der radialen Innenbegrenzung 15 in entsprechende Ringnuten 3 oder Aufnahmen des Gehäuseteils 2 eingefügt sein (siehe beispielsweise Fig. 2). Innerhalb der beiden konzentrischen Ringnuten 3 liegen dann die im Gehäuseteil 2 angeordneten Anschlussbohrungen 4 für die Zu- und Abführung des Kühlmittels. Die kreisringförmigen Randbereiche 17 der radialen Außenbegrenzung 14 und der radialen Innenbegrenzung 15 werden bevorzugt durch Kleben oder Schweißen mit dem Gehäuseteil 2 verbunden.

Gemäß einer nicht weiter dargestellten Ausführungsvariante ist es auch möglich, die radiale Außenbegrenzung 14 und die radiale Innenbegrenzung 15 mittels Schrauben unter Verwendung von Dichtmittel, vorzugsweise O-Ringdichtungen, am Gehäuseteil 2 zu befestigen.

Zwischen dem Zu- und dem Abführbereich des Kühlwassers bzw. zwischen den entsprechenden Anschlussbohrungen 4 ist ein Trennsteg 18 im umlaufenden Kühlwasserkanal 16 angeordnet bzw. angeformt. Die Lage des Trennsteges 18 ist strichliert in Fig. 2 angedeutet.

Erfindungsgemäß kann der Statorträger 13 in seiner radialen Außenbegrenzung 14 Versteifungsstrukturen 19 aufweisen, die den Querschnitt des umlaufenden Kühlkanals 16 örtlich verändern und für eine turbulente Strömung des Kühlmittels sorgen, wodurch die Kühlleistung erhöht wird.

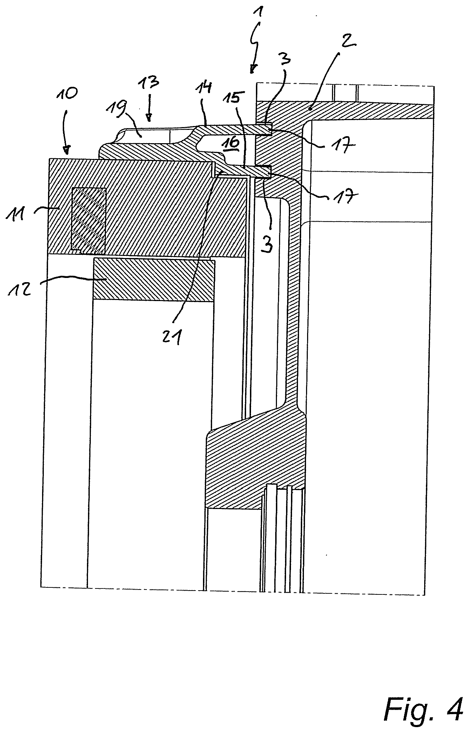

Fig. 4 zeigt einen Schnitt in Bereich einer Versteifungsstruktur 19 (im dargestellten Beispiel eine radiale Eindellung), wobei hier der Querschnitt des umlaufenden Kühlkanals 16 im Vergleich zur Schnittdarstellung gemäß Fig. 1 verkleinert ist und für eine turbulente Strömung des Kühlmittels sorgt. Alle Strukturen sind mittels Druckguss herstellbar.

Das benachbarte Gehäuseteil 2, an welchem der Statorträger 13 der elektrischen Maschine 10 befestigt ist, kann ein nicht der elektrischen Maschine (10) angehörender Bauteil, beispielsweise ein Lagerschild, eine Zentrierplatte, ein Schwungradgehäuse, ein Kurbelgehäuse, ein Getriebegehäuse, ein Kupplungsgehäuse oder ein Hybridmodulgehäuse sein.

## Patentansprüche

1. Elektrische Maschine (10), beispielsweise für ein Stromerzeugungsaggregat (1), insbesondere für die Reichweitenerhöhung eines elektrisch betriebenen Fahrzeugs oder zum elektrischen Betrieb eines Hybridelektrofahrzeugs, mit einem an einem benachbarten Gehäuseteil (2) befestigbaren Stator (11) und einem damit zusammenwirkenden Rotor (12), **dadurch gekennzeichnet, dass** der Stator (11) in einen Statorträger (13) eingefügt oder eingepresst ist, wobei der Statorträger (13) einteilig ausgeführt ist und zwischen einer radialen Außenbegrenzung (14) und einer radialen Innenbegrenzung (15) einen radial umlaufenden, axial in Richtung des benachbarten Gehäuseteils (2) einseitig offenen Kühlkanal (16) aufweist, wobei der Kühlkanal (16) nach der Befestigung des Statorträgers (13) am benachbarten Gehäuseteil (2) axial geschlossen ist.

2. Maschine (10) nach Anspruch 1, **dadurch gekennzeichnet, dass** der einteilige Statorträger (13) mittels Druckguss, beispielsweise als Aluminiumdruckgussteil, herstellbar ist.

3. Maschine (10) nach Anspruch 1 oder 2, **dadurch gekennzeichnet, dass** kreisförmige Randbereiche (17) der radialen Außenbegrenzung (14) und der radialen Innenbegrenzung (15) in entsprechende Ringnuten (3) oder Aufnahmen des benachbarten Gehäuseteils (2) eingefügt sind.

4. Maschine (10) nach einem der Ansprüche 1 bis 3, **dadurch gekennzeichnet, dass** die kreisförmigen Randbereiche (17) der radialen Außenbegrenzung (14) und der radialen Innenbegrenzung (15) durch Kleben mit dem benachbarten Gehäuseteil (2) verbunden sind.

5. Maschine (10) nach einem der Ansprüche 1 bis 3, **dadurch gekennzeichnet, dass** die kreisförmigen Randbereiche (17) der radialen Außenbegrenzung (14) und der radialen Innenbegrenzung (15) durch Schweißen mit dem benachbarten Gehäuseteil (2) verbunden sind.

6. Maschine (10) nach einem der Ansprüche 1 bis 5, **dadurch gekennzeichnet, dass** die Innenwand (20) der Innenbegrenzung (15) des Statorträgers (13) eine Abstufung (21) zur einfacheren Einpressung des Stators (11) aufweist.

7. Maschine (10) nach einem der Ansprüche 1 bis 6, **dadurch gekennzeichnet, dass** der Statorträger (13) an der radialen Außenbegrenzung (14) angeordnete Anschlüsse für die Zu- und Abführung des Kühlmittels aufweist.

8. Maschine (10) nach einem der Ansprüche 1 bis 6, **dadurch gekennzeichnet, dass** die Zu- und Abführung des Kühlmittels in den Kühlkanal (16) über Anschlussbohrungen (4) im benachbarten Gehäuseteil (2) erfolgt.

9. Maschine (10) nach einem der Ansprüche 7 oder 8, **dadurch gekennzeichnet, dass** zwischen der Zu- und Abführung des Kühlmittels ein Trennsteg (18) im umlaufenden Kühlwasserkanal (16) angeformt ist.

10. Maschine (10) nach einem der Ansprüche 1 bis 9, **dadurch gekennzeichnet, dass** der Statorträger (13) in seiner radialen Außenbegrenzung (14) Versteifungsstrukturen (19) aufweist, die den Querschnitt des umlaufenden Kühlkanals (16) örtlich verändern und für eine turbulente Strömung des Kühlmittels sorgen.

11. Maschine (10) nach einem der Ansprüche 1 bis 10, **dadurch gekennzeichnet, dass** das benachbarte Gehäuseteil (2) ein nicht der elektrischen Maschine (10) angehörender Bauteil ist.

12. Maschine (10) nach einem der Ansprüche 1 bis 11, **dadurch gekennzeichnet, dass** das benachbarte Gehäuseteil (2) ein Lagerschild, eine Zentrierplatte, ein Schwungradgehäuse, ein Kurbelgehäuse, ein Getriebegehäuse, ein Kupplungsgehäuse oder ein Hybridmodulgehäuse ist.

## Claims

1. An electric machine (10), e.g. for a power generation unit (1), in particular for increasing the range of an electrically operated vehicle or for electrically operating a hybrid electric vehicle, comprising a stator (11) which can be attached to an adjacent housing part (2) and a rotor (12) which interacts therewith, **characterised in that** the stator (11) is inserted or pressed into a stator carrier (13), wherein the stator carrier (13) is configured as an integral part and comprises a radially circumferential cooling channel (16), which is open on one side axially in the direction of the adjacent housing part (2), between a radial outer boundary (14) and a radial inner boundary (15), wherein the cooling channel (16) is axially closed after the stator carrier (13) is fixed to the adjacent housing part (2).

2. A machine (10) according to claim 1, **characterised in that** the integral stator carrier (13) can be produced by means of die-casting, for example as an aluminium die-cast part.

3. A machine (10) according to claim 1 or 2, **characterised in that** circular edge regions (17) of the radial outer boundary (14) and the radial inner boundary (15) are inserted into corresponding annular grooves (3) or receptacles of the adjacent housing part (2).

4. A machine (10) according to one of claims 1 to 3, **characterised in that** the circular edge regions (17) of the radial outer boundary (14) and the radial inner boundary (15) are connected by gluing to the adjacent housing part (2).

5. A machine (10) according to one of claims 1 to 3, **characterised in that** the circular edge regions (17) of the radial outer boundary (14) and the radial inner boundary (15) are connected by welding to the adjacent housing part (2).

6. A machine (10) according to one of claims 1 to 5, **characterised in that** the inner wall (20) of the inner boundary (15) of the stator carrier (13) has a step (21) for easier pressing-in of the stator (11).

7. A machine (10) according to one of claims 1 to 6, **characterised in that** the stator carrier (13) has connections, arranged on the radial outer boundary (14), for the supply and discharge of the coolant.

8. A machine (10) according to one of claims 1 to 6, **characterised in that** the supply and discharge of the coolant into the cooling channel (16) takes place via connection bores (4) in the adjacent housing part (2).

9. A machine (10) according to one of claims 7 or 8, **characterised in that** a separating web (18) is formed between the supply and discharge of the coolant in the circumferential cooling water channel (16).

10. A machine (10) according to one of claims 1 to 9, **characterised in that** the stator carrier (13) has stiffening structures (19) in its radial outer boundary (14), which locally change the cross-section of the circumferential cooling channel (16) and ensure a turbulent flow of the coolant.

11. A machine (10) according to one of claims 1 to 10, **characterised in that** the adjacent housing part (2) is a component not belonging to the electrical machine (10).

12. A machine (10) according to one of claims 1 to 11, **characterised in that** the adjacent housing part (2) is a bearing plate, a centring plate, a flywheel housing, a crankcase, a transmission housing, a clutch housing or a hybrid module housing.

## Revendications

1. Machine électrique (10) destinée par exemple à un ensemble générateur de courant (1) en particulier pour permettre d'augmenter l'autonomie d'un véhicule électrique ou pour l'actionnement électrique d'un véhicule électrique hybride, comportant un stator (11) pouvant être fixé sur une partie de boîtier voisine (2) et un rotor (12) coopérant avec celui-ci,
**caractérisée en ce que**
le stator (11) est inséré ou introduit à force dans un porte-stator (13), le porte-stator (13) étant réalisé en une seule pièce et comportant, entre une limitation externe radiale (14) et une limitation interne radiale (15), un canal de refroidissement périphérique (16) s'étendant radialement et ouvert axialement d'un côté dans la direction de la partie de boîtier (2) voisine, le canal de refroidissement (16) étant fermé axialement après la fixation du porte-stator (13) sur la partie de boîtier (2) voisine.

2. Machine (10) conforme à la revendication 1,
**caractérisée en ce que**
le porte-stator (13) en une seule pièce peut être obtenu par moulage sous pression, en particulier sous la forme d'une pièce moulée sous pression en aluminium.

3. Machine (10) conforme à la revendication 1 ou 2,
**caractérisée en ce que**
des zones de bord circulaires (17) de la limitation externe radiale (14) et de la limitation interne radiale (15) sont insérées dans des rainures annulaires (3) ou des logements de réception correspondants de la partie de boîtier (2) voisine.

4. Machine (10) conforme à l'une des revendications 1 à 3,
**caractérisée en ce que**
les zones de bord circulaires (17) de la limitation externe radiale (14) et de la limitation interne radiale (15) sont reliées par collage à la partie de boîtier (2) voisine.

5. Machine (10) conforme à l'une des revendications 1 à 3,
**caractérisée en ce que**
les zones de bord circulaires (17) de la limitation externe radiale (14) et de la limitation interne radiale (15) sont reliées par soudage à la partie de boîtier (2) voisine.

6. Machine (10) conforme à l'une des revendications 1 à 5,
**caractérisée en ce que**
la paroi interne (20) de la limitation interne (15) du porte-stator (13) comporte un gradin (21) pour faciliter l'insertion à force du stator (11).

7. Machine (10) conforme à l'une des revendications 1 à 6,
**caractérisée en ce que**
le porte-stator (13) comporte sur la limitation externe radiale (14) des connexions permettant l'introduction et l'évacuation d'un fluide de refroidissement.

8. Machine (10) conforme à l'une des revendications 1 à 6,
**caractérisée en ce que**
l'introduction et l'évacuation du fluide de refroidissement dans le canal de refroidissement (16) s'effectue par l'intermédiaire de perçages de connexion (4) situés dans la partie de boîtier (2) voisine.

9. Machine (10) conforme à l'une des revendications 7 et 8,
**caractérisée en ce qu'**
entre l'introduction et l'évacuation du fluide de refroidissement est formée une traverse de séparation (18) dans le canal d'eau de refroidissement (16) périphérique.

10. Machine (10) conforme à l'une des revendications 1 à 9,
**caractérisée en ce que**
le porte-stator (13) comporte dans sa limitation externe radiale (14) des structures de renfort (19) qui modifient localement la section du canal de refroidissement périphérique (16) et permettent d'obtenir un écoulement turbulent du fluide de refroidissement.

11. Machine (10) conforme à l'une des revendications 1 à 10,
**caractérisée en ce que**
la partie de boîtier (2) voisine est un composant n'appartenant pas à la machine électrique (10).

12. Machine (10) conforme à l'une des revendications précédentes,
**caractérisée en ce que**
la partie de boîtier (2) voisine est une flasque, une plaque de centrage, un boîtier de volant, un carter de vilebrequin, un carter de boîte de vitesses, un carter de transmission ou un carter de module hybride.
